Europäisches Patentamt

European Patent Office

Office européen des brevets

(19)

(11) Numéro de publication : **0 480 783 A1**

# (12) DEMANDE DE BREVET EUROPEEN

(21) Numéro de dépôt : **91402426.0**

(51) Int. Cl.⁵ : **B23K 26/04**

(22) Date de dépôt : **12.09.91**

(30) Priorité : **10.10.90 FR 9012515**

(43) Date de publication de la demande :
**15.04.92 Bulletin 92/16**

(84) Etats contractants désignés :
**BE CH DE ES GB LI SE**

(71) Demandeur : **FRAMATOME**
**Tour Fiat 1, Place de la Coupole**
**F-92400 Courbevoie (FR)**

(72) Inventeur : **Boudot, Cécile**
**8, rue de l'Alma**
**F-71100 Chalons sur Saone (FR)**

(74) Mandataire : **Jacobson, Claude et al**
**Cabinet Lavoix 2, Place d'Estienne d'Orves**
**F-75441 Paris Cedex 09 (FR)**

(54) **Procédé et dispositif de travail au laser avec contrôle à distance.**

(57)    Suivant ce procédé, un faisceau laser (2) est véhiculé jusqu'au voisinage d'un point de travail (10), sur lequel il est focalisé, et on effectue une analyse spectrale de la lumière émise au point de travail pendant le travail au laser .

Application au soudage au laser dans des tubes de petits diamètres.

EP 0 480 783 A1

La présente invention est relative au travail au laser. Elle s'applique notamment au soudage au laser dans des tubes de petits diamètres tels que les tubes de générateurs de vapeur des réacteurs nucléaires à eau pressurisée.

Dans certains travaux au laser, tel que le soudage à l'intérieur des tubes de générateurs de vapeur, il n'est pas possible d'observer directement la zone de travail.

L'invention a pour but de fournir une technique permettant de contrôler le bon déroulement du travail au laser malgré cette difficulté.

A cet effet, l'invention a pour objet un procédé de travail au laser, dans lequel un faisceau laser est véhiculé jusqu'au voisinage d'un point de travail, sur lequel il est focalisé, caractérisé en ce qu'on effectue une analyse spectrale de la lumière émise au point de travail pendant le travail au laser.

L'analyse peut notamment être effectuée en continu et/ou en temps réel.

L'invention a également pour objet un dispositif de travail au laser destiné à la mise en oeuvre d'un tel procédé. Ce dispositif, du type comprenant un laser, des moyens de transport du faisceau laser, et des moyens de focalisation du faisceau sur un point de travail, est caractérisé en ce qu'il comprend un miroir dichroïque interposé sur le trajet du faisceau laser, transparent à ce faisceau laser et réfléchissant d'autres longueurs d'ondes, et un spectromètre recevant la lumière réfléchie par ce miroir.

Suivant d'autres caractéristiques de ce dispositif :

– lorsque lesdits moyens de transport comprennent une fibre optique, le miroir dichroïque est monté en amont de cette fibre optique ;

– le spectromètre est adapté pour filtrer les rayons lumineux issus de la lampe flash du laser;

– le spectromètre est du type à interféromètre.

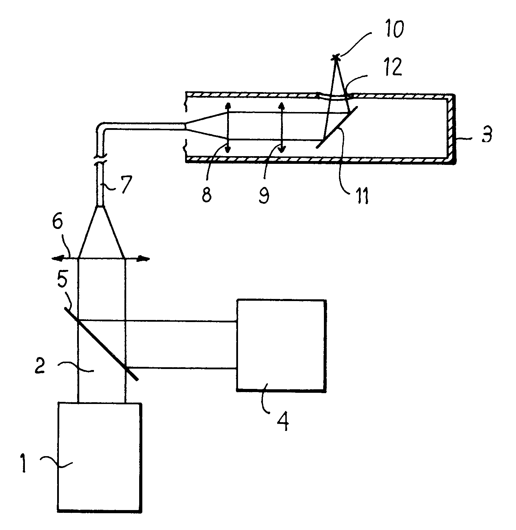

Un exemple de mise en oeuvre de l'invention va maintenant être décrit en regard du dessin annexé, dont la figure unique représente schématiquement un dispositif de travail au laser conforme à l'invention.

Le dispositif représenté au dessin comprend essentiellement un laser 1 de puissance du type YAG, émettant un faisceau laser 2 de longueur d'onde 1,06 micromètre, une tête de travail 3 de forme générale cylindrique, et un spectromètre 4. Ce dispositif est destiné à réaliser une soudure circulaire à l'intérieur d'un tube de petit diamètre (non représenté), par exemple pour y fixer un manchon intérieur de réparation (non représenté).

Le faisceau laser traverse un miroir dichroïque 5 incliné à 45°C, transparent à la longueur d'onde de ce faisceau et réfléchissant pour les autres longueurs d'ondes. Il est ensuite focalisé par une lentille 6 sur l'extrémité amont d'une fibre optique 7, laquelle le transporte jusque dans la tête 3.

A la sortie de la fibre optique, le faisceau est collimaté par une lentille 8, puis focalisé par une lentille 9 sur le point de travail 10 (appartenant à la paroi du tube dans cet exemple) après réflexion sur un miroir 11 incliné à 45°C et traversée d'une ouverture latérale 12 de la tête de travail.

En fonctionnement, le point 10 de travail émet pendant le soudage une lumière. Celle-ci suit en sens inverse le trajet du faisceau laser, jusqu'au miroir 5, qui la réfléchit vers le spectromètre 4, où elle subit une analyse en continu et en temps réel.

Si la soudure est effective au point 10, le spectromètre décèle les raies d'ionisation du gaz de protection du soudage ainsi que les raies correspondant aux vapeurs métalliques du métal de base vaporisé pendant le soudage, avec certains rapports d'amplitude entre ces raies. On peut ainsi, par comparaison avec un spectre étalon correspondant à une soudure satisfaisante, suivre en temps réel le bon déroulement du soudage.

Il est à noter que, dans certains cas, le spectromètre peut recevoir en outre un spectre lumineux provenant des lampes flash du laser 1. Dans ce cas, on met ce spectre parasite, qui est stable et bien reproductible, en mémoire dans le spectromètre, et on le retranche du spectre mesuré.

Le miroir 5 doit bien entendu être choisi de manière à réfléchir tout le spectre lumineux émis par le point 10.

De préférence, le spectromètre utilisé est du type à interféromètre.

Le procédé décrit ci-dessus peut être utilisé pour le contrôle en temps réel de tout procédé de travail au laser : traitement thermique, coupage, usinage, nettoyage, etc.

## Revendications

1. Procédé de travail au laser, dans lequel un faisceau laser (2) est véhiculé jusqu'au voisinage d'un point de travail (10), sur lequel il est focalisé, caractérisé en ce qu'on effectue une analyse spectrale de la lumière émise au point de travail pendant le travail au laser.

2. Procédé selon la revendication 1, caractérisé en ce que ladite analyse est effectuée en continu.

3. Procédé suivant la revendication 1 ou 2, caractérisé en ce que ladite analyse est effectuée en temps réel.

4. Dispositif de travail au laser, du type comprenant un laser (1), des moyens (7) de transport du faisceau laser, et des moyens (8,9) de focalisation du faisceau sur un point de travail (10), caractérisé en ce qu'il comprend un miroir dichroïque (5) interposé sur le trajet du faisceau laser, transparent à ce faisceau laser et réfléchissant d'autres longueurs d'ondes, et un spectromètre (4) recevant la lumière réfléchie par ce miroir.

5. Dispositif suivant la revendication 4, dans lequel lesdits moyens de transport (7) comprennent une fibre optique, caractérisé en ce que le miroir dichroïque (5) est monté en amont de cette fibre optique.

6. Dispositif suivant la revendication 4 ou 5, caractérisé en ce que le spectromètre (4) est adapté pour filtrer les rayons lumineux issus de la lampe flash du laser (1).

7. Dispositif suivant l'une quelconque des revendications 4 à 6, caractérisé en ce que le spectromètre (4) est du type à interféromètre.

Office européen
des brevets

**RAPPORT DE RECHERCHE EUROPEENNE**

Numero de la demande

EP 91 40 2426

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | IBM TECHNICAL DISCLOSURE BULLETIN vol. 26, no. 6, novembre 1983, pages 2780-2781, New York, US; G. HOPF et al.: "Optical etch-point detection using chromatic aberration" * pages 2780,2781 * | 1,2 | B 23 K 26/04 |
| A | idem | 4,6 | |
| X | EP-A-0 195 825 (R. LANGEN) * page 7; figure 1 * | 1-4 | |
| A | EP-A-0 331 891 (INTERNATIONAL BUSINESS MACHINES CORP.) * revendications 1-11; figure 1 * | 1,2,4,5 | |
| A | US-A-4 790 651 (L.B. BROWN et al.) * revendication 2 * | 7 | |

DOMAINES TECHNIQUES RECHERCHES (Int. Cl.5)

B 23 K

Le présent rapport a été établi pour toutes les revendications

| Lieu de la recherche | Date d'achèvement de la recherche | Examinateur |
|---|---|---|
| BERLIN | 13-01-1992 | WUNDERLICH J E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................
& : membre de la même famille, document correspondant

EPO FORM 1503 03.82 (P0402)